# EUROPEAN PATENT SPECIFICATION

(11) **EP 3 903 960 B1**
(45) Date of publication and mention of the grant of the patent: **03.06.2026**
(21) Application number: 20171865.7
(22) Date of filing: 28.04.2020
(51) Int. Cl.: B21F 27/12, B25J 11/00, B25J 9/16, B23K 11/06, B23K 11/00, B21F 15/08, B21F 15/06, B21F 1/00, E04C 5/06

(54) **BUILDING STRUCTURE FABRICATION SYSTEM**
GEBÄUDESTRUKTURHERSTELLUNGSSYSTEM
SYSTÈME DE FABRICATION DE STRUCTURE DE BÂTIMENT

(43) Date of publication of application: 03.11.2021
(73) Proprietor: Mesh AG, 5242 Birr (CH)
(72) Inventor: MIRJAN, Ammar, 5415 Nussbaumen (CH); KOH, Mattis, 8004 Zurich (CH); RÜPPEL, Marvin Lee, 8037 Zurich (CH); GRAMAZIO, Fabio Matteo, 8005 Zurich (CH); KOHLER, Matthias, 8616 Riedikon (CH)
(74) Representative: Keller Schneider Patent- und Markenanwälte AG

(56) References cited:
- WO-A1-2017/153559
- US-A1- 2018 333 764
- US-B2- 10 040 141
- US-B2- 10 094 114

## Description

### FIELD OF THE INVENTION

The present invention relates to a building structure fabrication system and a method of fabricating a building structure.

### BACKGROUND OF THE INVENTION

Wire structures form an integral part of building construction techniques, where such wire structures are used as part of wall structures and can for example form part of reinforced concrete structures. The wire structures can only generally be made as simple shaped structures, where significant skilled manpower is required if more complex wire shapes are to be fabricated. This inhibits the fabrication of complex 3-D building structures.

There is a need to address this issue.

WO 2017/153559 A1, US 2018/333764 A1, and US 10 040 141 B2 illustrate examples of building structure fabrication systems of the state of the art.

US 10 094 114 B2 discloses a building structure fabrication system with the features of the preamble of claim 1.

### SUMMARY OF THE INVENTION

It would be advantageous to have improved means of providing a wire structure to be used for fabricating a building structure.

The object of the present invention is solved with the subject matter of the independent claims 1 and 12, wherein further embodiments are incorporated in the dependent claims. It should be noted that the following described aspects and examples of the invention apply also to the building structure fabrication system and the method of fabricating a building structure.

In a first aspect, there is provided a building structure fabrication system for feed wire, feed rod or feed band, the system comprising:
- a processing unit; and
- a manipulator.

The processing unit is configured to receive assembly information. The manipulator is configured to align a feed to a primary structure at a plurality of intersection points. The feed is a feed wire, feed rod, or feed band. The primary structure is a primary wire structure, primary rod structure, or primary band structure. The alignment of the feed to the primary structure at the plurality of intersection points comprises utilization of the assembly information.

In this manner, complex three-dimensional wire structures can be fabricated from for example wire in the form of Rebar.

The assembly information can for example be 3D information or data coming from a computational model. This information can be derived, for example, from information provided by an architect and/or a structural engineer.

By utilising assembly information, such as three-dimensional mesh data (that can be a series of intersection points in space) of where the feed wire or feed rod or feed band is to be fixed in space, the system can then align the wire/rod/band to this mathematically defined structure. The underlying primary wire/rod/band structure could also be defined precisely to this mathematically defined structure such that the aligned feed wire/rod/band also aligns with the primary wire/rod/band structure. However, the primary wire/rod/band structure can be positioned with a certain degree of flexibility of wires/rods/bands forming the primary structure, and need not then be as accurately defined as that defined by the assembly information. Then, the feed wire or feed rod or feed band can be accurately aligned to intersection points, which in some cases could be immediately adj acent to wires/rods/bands of the primary structure or in other cases the wires/rods/bands of the primary structure could be somewhat spaced from the aligned feed wire/rod/band. Then, the primary structure at that location could be deformed or bent or moved slightly to be aligned with the accurately aligned feed wire/rod/band, thereby enabling an overall accurate three-dimensional building structure to be fabricated.

In an example, the manipulator is configured to align the feed to the primary structure at a first intersection point of a pair of adjacent intersection points and then align the feed to the primary structure at a second intersection point of the pair of adj acent intersection points.

In other words, the manipulator of the system progresses along the primary structure, aligning the feed to the intersection points on the basis of the assembly information as it moves.

In an example, the manipulator is configured to bend the feed. Alignment of the feed to the primary structure at the plurality of intersection points can comprise a bending of the feed between at least one pair of adjacent intersection points.

The manipulator is configured to attach the feed to the primary structure at the plurality of intersection points.

Thus, not only can the system align wire such as Rebar to a complex structure, where a human could then attach the wire/rod/band to the complex structure, but now the manipulator of the system itself can attach the wire/rod/band to the complex structure.

In an example, attachment of the feed to the primary structure at the plurality of intersection points comprises utilization of the assembly information.

The manipulator is configured to attach the feed to the primary structure at a first intersection point of a pair of adjacent intersection points and then attach the feed to the primary structure at a second intersection point of the pair of adjacent intersection points.

In an example, attachment of the feed to the primary structure at the plurality of intersection points comprises a bending of the feed between at least one pair of adjacent intersection points.

In this way, the manipulator of the system can progress along the primary structure, bending and aligning the feed wire/rod/band to the intersection points on the basis of the assembly information as it moves.

In an example, the manipulator is configured to attach the feed to the primary structure at a first intersection point of a pair of adjacent intersection points and then bend the feed between the pair of adjacent intersection points and then attach the feed to the primary structure at a second intersection point of the pair of adjacent intersection points.

Thus, the manipulator can bend the feed wire/rod/band with a feed wire/rod/band that is not attached to any portion of the primary wire/rod/band structure, but as the manipulator bends and aligns the feed wire/rod/band it can also attach the feed wire/rod/band to the primary wire/rod/band structure at intersection points, which speeds up fabrication and can in certain situations aid in bending of the feed wire/rod/band.

In an example, the manipulator is configured to move at least one wire or rod or band segment of the primary structure. Attachment of the feed to the primary structure at the plurality of intersection points can comprise a movement of the at least one wire or rod or band segment of the primary structure.

In other words, the primary wire/rod/band structure does not need to be accurately aligned with the intersection points, but the manipulator can align the feed wire/rod/band to a correct point in space aligned with an intersection point. If the associated part of the primary wire/rod/band structure to which the feed wire/rod/band is to be attached is not immediately adjacent to the aligned feed wire/rod/band, the manipulator can grasp a segment of the primary wire/rod/band structure and pull it towards the manipulator and towards the correct intersection point. It can then be attached to the bent and aligned feed wire/rod/band. In this way, a three-dimensional building structure can be accurately fabricated according to the assembly information.

In an example, the manipulator is configured to move the at least one wire or rod or band segment of the primary structure such that a part of the at least one wire or rod or band segment is positioned at a corresponding at least one intersection point, such that the feed is attached to the at least one wire or rod or band segment at the at least one intersection point.

In an example, attachment of the feed to the primary wire structure at the plurality of intersection points comprises: tying; MIG/MAG welding; or contact welding.

The manipulator comprises a clamp configured to clamp a wire or rod or band segment of the primary structure to the feed at or in the vicinity of an associated intersection point.

In this manner, the correct clamping force for contact welding can be provided.

In an example, the system comprises at least one sensor device configured to determine manipulator information, wherein the manipulator information comprises one or more of: a location of the manipulator relative to at least one intersection point; a distance between the manipulator and at least one part of the primary structure; a distance between the manipulator and at least one intersection point; a determined contact between the manipulator and at least one part of the primary structure; a contact force between the manipulator and at least one part of the primary structure; a torque being applied to the manipulator. The alignment of the feed to the primary structure at the plurality of intersection points can comprise utilization of the manipulator information.

In this way, the manipulator can align and bend feed wire/rod/band to an intersection point based on for example 3-D data of the assembly information, such as from a computational on model, with this alignment being refined if necessary by additional sensor data. Such sensor data can provide for increased accuracy and precision.

The sensor data can also be used to ensure that the manipulator does not unintentionally contact the primary wire/rod/band structure and damage itself.

In an example, the system comprises at least one sensor device configured to determine manipulator information, wherein the manipulator information comprises one or more of: a location of the manipulator relative to at least one intersection point; a distance between the manipulator and at least one part of the primary structure; a distance between the manipulator and at least one intersection point; a determined contact between the manipulator and at least one part of the primary structure; a contact force between the manipulator and at least one part of the primary structure; a torque being applied to the manipulator. The attachment of the feed wire to the primary structure at the plurality of intersection points can comprise utilization of the manipulator information.

In a second aspect, there is provided a manipulator for feed wire, feed rod or feed band. The manipulator is configured to be controlled to align a feed wire, feed rod or feed band to a primary structure at a plurality of intersection points. The primary structure is a primary wire structure, primary rod structure, or primary band structure. The alignment of the feed wire, feed rod or feed wire to the primary structure at the plurality of intersection points comprises utilization of assembly information.

In an example, the manipulator comprises a roller configured to engage with and roll along the feed wire or feed rod or feed band.

In an example, the manipulator comprises a conduit section through which the feed wire or feed rod or feed band is configured to run.

In an example, the roller and conduit section are part of a head portion of the feed manipulator.

In an example, the manipulator comprises a transformer.

In an example, the manipulator comprises a cathode system.

In an example, the manipulator comprises an anode system.

In an example, the roller is part of the part of the anode system.

In an example, the manipulator comprises a cathode plate that is part of the cathode system and is arranged adjacent to the roller.

The manipulator comprises a clamp configured to clamp a wire or rod or band segment of the primary building structure to the feed wire or feed rod or feed band.

In an example, the clamp is part of the cathode system.

In a third aspect, there is provided a method of fabricating a building structure, the method comprising:
receiving by a processing unit assembly information; and
aligning with a manipulator a feed to a primary structure at a plurality of intersection points, comprising utilizing the assembly information;
wherein, the feed is a feed wire, feed rod, or feed band; and
wherein, the primary structure is a primary wire structure, primary rod structure, or primary band structure.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawing:
Figs. 1-6 show a representation from one figure to the next of a manipulator of a building structure fabrication system aligning and attaching a feed wire to a primary wire structure;
Figs. 7-15 show a representation from one figure to the next of a manipulator of a building structure fabrication system aligning and attaching a feed wire to a primary wire structure;
Fig. 16 shows a detailed example of a body portion of a manipulator of a building structure fabrication system, and a head portion of the manipulator rotationally attached to the head portion;
Fig. 17 shows an example of a primary wire structure, with two lines of feed wire at the bottom that have been aligned and attached to the primary wire structure using a building structure fabrication system;
Fig. 18 shows an example of a primary wire structure, with lines of feed wire that have been aligned and attached to the primary wire structure using a building structure fabrication system;
Fig. 19 shows an example of a manipulator of a building structure fabrication system that is aligning and attaching a feed wire to a primary wire structure;
Fig, 20 shows an example of two lines of feed wire that have been aligned and attached to a number of bars of the primary wire structure using a building structure fabrication system; and
Fig. 21 shows an example of a manipulator of a building structure fabrication system that is in the process of aligning and attaching a feed wire to a number of bars of the primary wire structure.

### DETAILED DESCRIPTION OF EMBODIMENTS

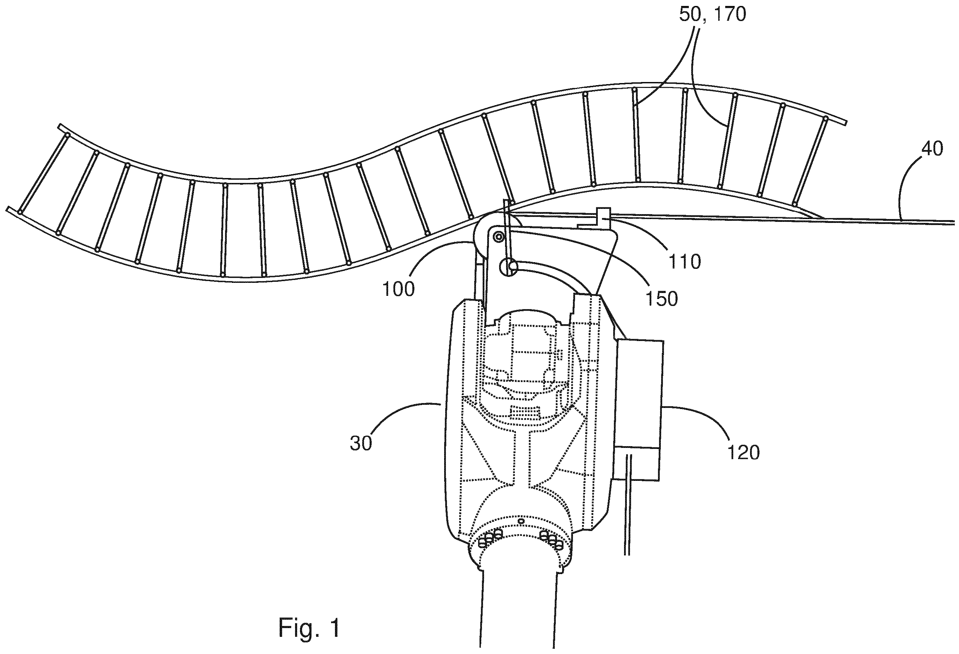

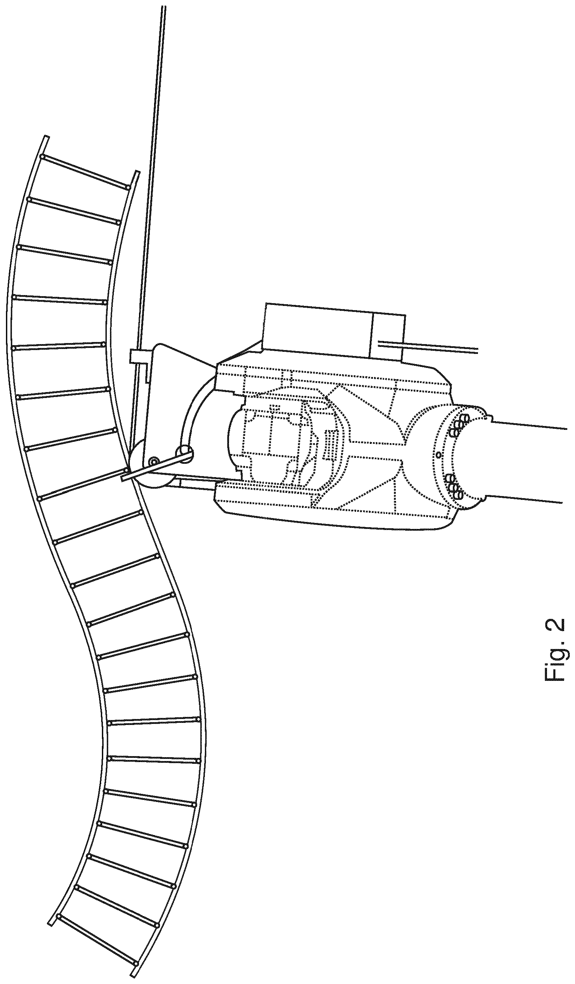

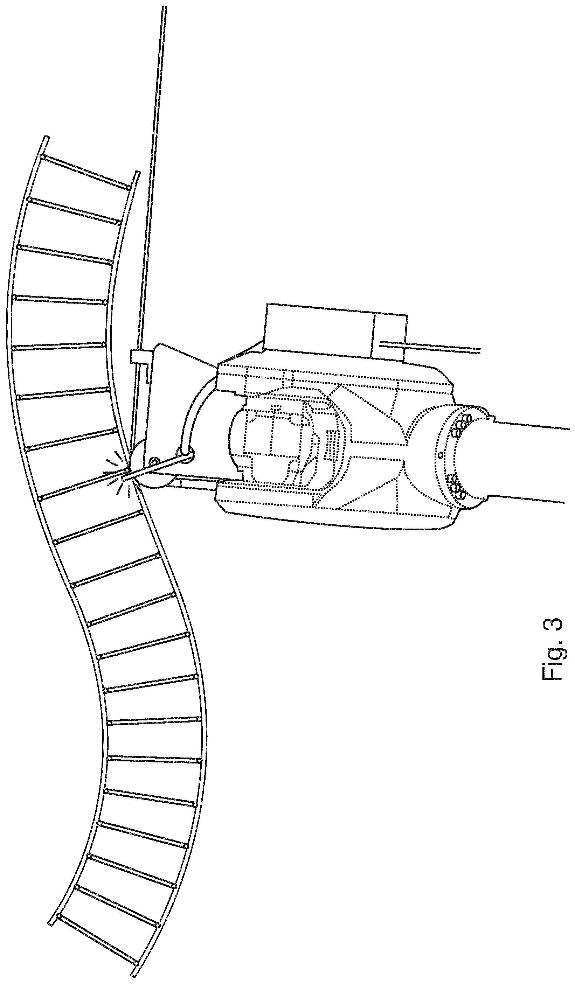

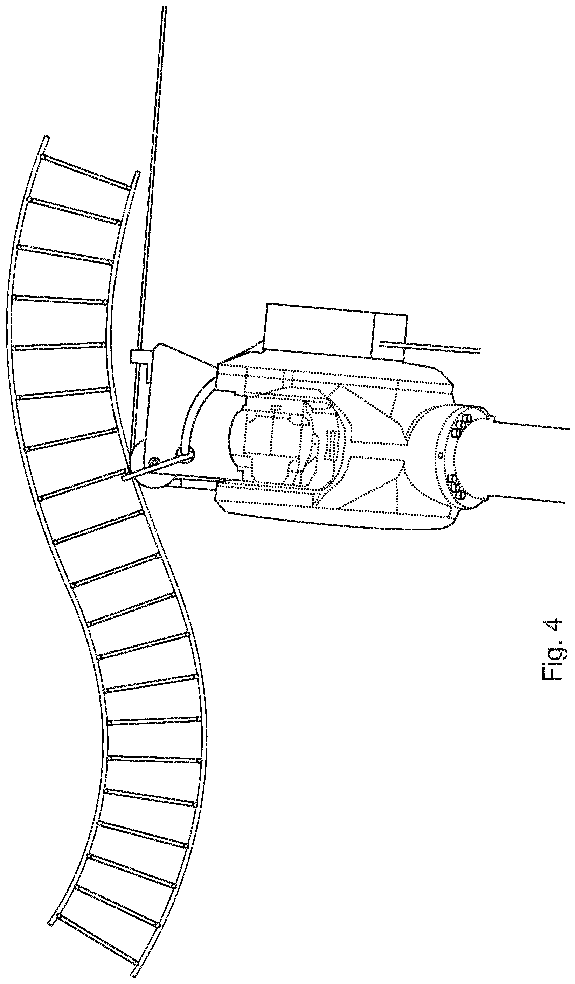

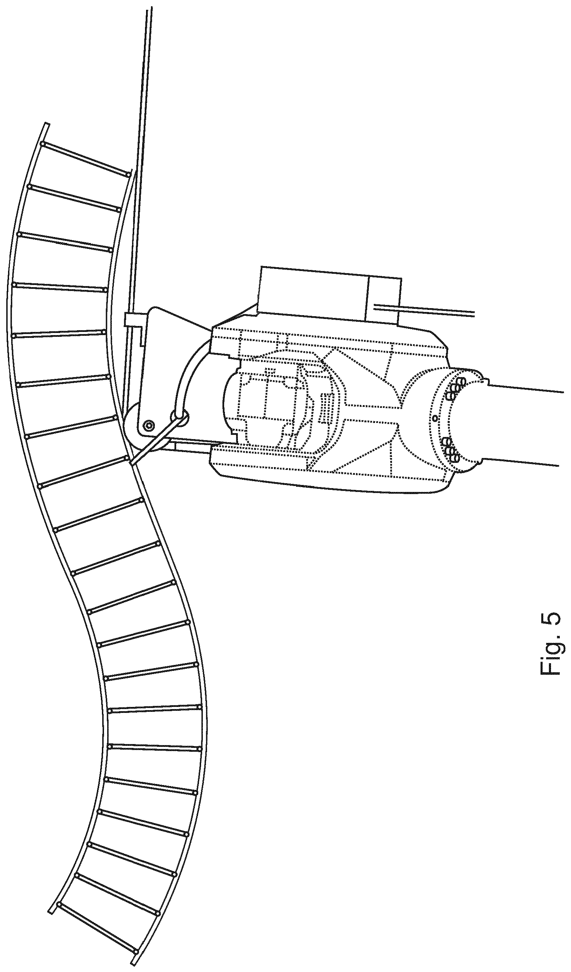

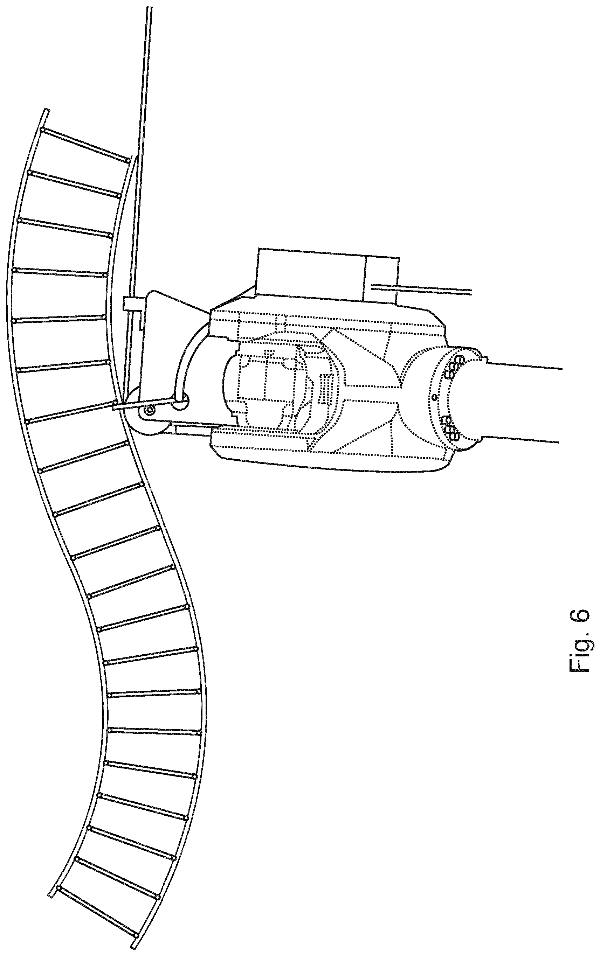

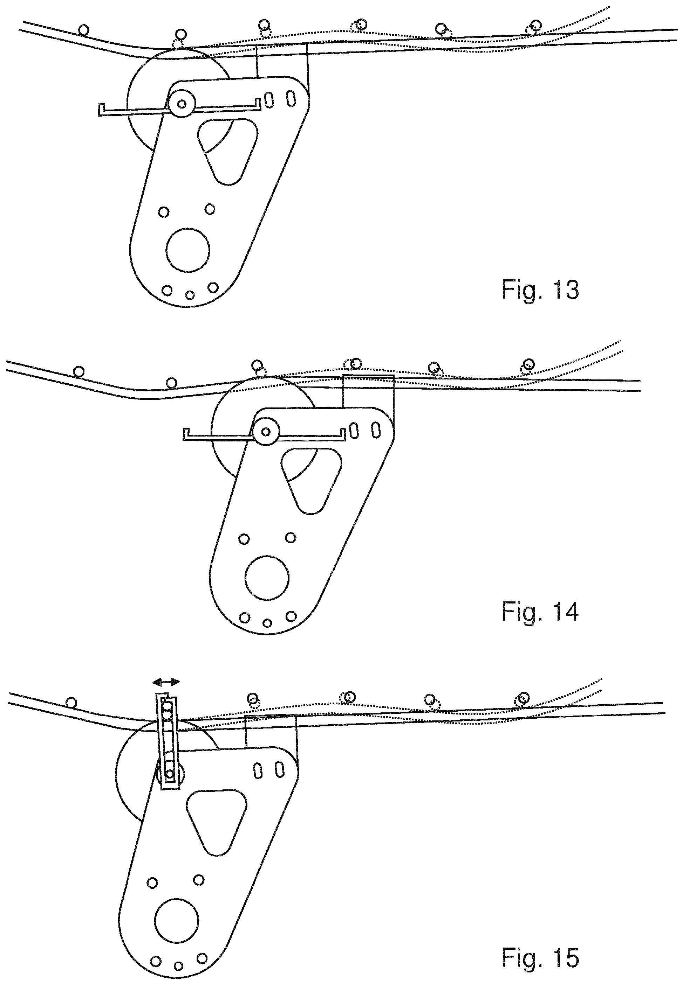

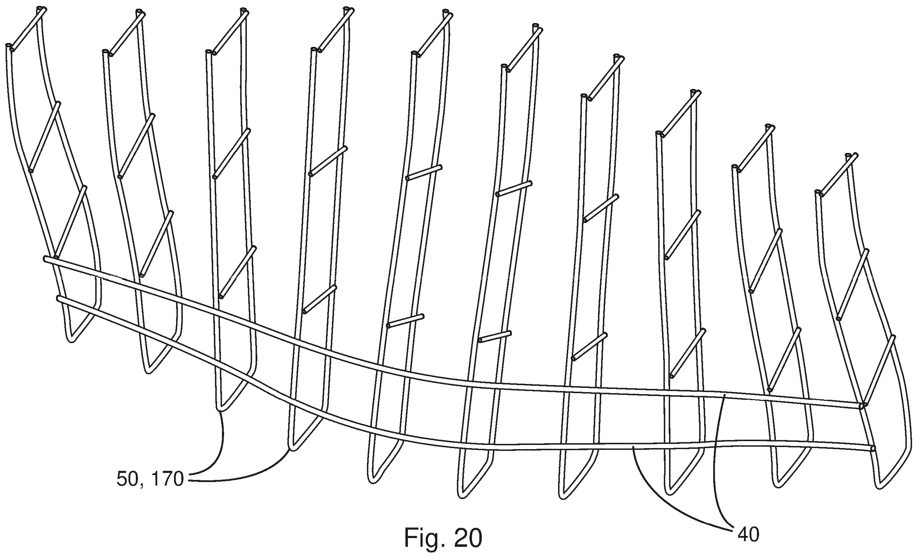

Figs. 1-21 relate to a building structure fabrication system, a manipulator for feed wire, feed rod or feed band, and a method of fabricating a building structure.

The building structure fabrication system for feed wire, feed rod or feed band comprises a processing unit 20, and a manipulator 30. The processing unit is configured to receive assembly information. The manipulator is configured to align a feed 40 to a primary structure 50 at a plurality of intersection points 60. The feed is a feed wire, feed rod, or feed band. The primary structure is a primary wire structure, primary rod structure, or primary band structure. The alignment of the feed to the primary structure at the plurality of intersection points comprises utilization of the assembly information.

In an example, the feed wire is metal. In an example, the feed rod is metal. In an example, the feed band is metal.

In an example, the feed wire is steel. In an example, the feed rod is steel. In an example, the feed band is steel.

In an example, the feed wire is a natural fibre, such as rattan. In an example, the feed rod is a natural fibre, such as rattan. In an example, the feed band is a natural fibre, such as rattan.

In an example, the feed wire is a synthetic material. In an example, the feed rod is a synthetic material. In an example, the feed band is a synthetic material.

In an example, the feed wire is carbon fibre. In an example, the feed rod is carbon fibre. In an example, the feed band is carbon fibre.

In an example, the feed wire has a circular cross-section. In an example, the feed rod has a circular cross-section. In an example, the feed wire has a non-circular cross-section.

In an example, the feed rod has a non-circular cross-section. In an example, the feed band has a non-circular cross-section.

In an example, wire of the primary building structure is metal. In an example, rod of the primary building structure is metal. In an example, band of the primary building structure is metal.

In an example, wire of the primary building structure is steel. In an example, rod of the primary building structure is steel. In an example, band of the primary building structure is steel.

In an example, wire of the primary building structure is a natural fibre, such as rattan. In an example, rod of the primary building structure is a natural fibre, such as rattan. In an example, band of the primary building structure is a natural fibre, such as rattan.

In an example, wire of the primary building structure is a synthetic material. In an example, rod of the primary building structure is a synthetic material. In an example, band of the primary building structure is a synthetic material.

In an example, wire of the primary building structure is carbon fibre. In an example, rod of the primary building structure is carbon fibre. In an example, band of the primary building structure is carbon fibre.

In an example, wire of the primary building structure has a circular cross-section. In an example, rod of the primary building structure has a circular cross-section.

In an example, wire of the primary building structure has a non-circular cross-section. In an example, rod of the primary building structure has a non-circular cross-section. In an example, band of the primary building structure has a non-circular cross-section.

In an example, the feed is rebar.

In an example, the primary building structure is made from rebar.

Thus, the system can operate with feed stock that is wire, rod or band that is metal or bendable carbon fibre for example, and where this stock can be round or other shapes, such as a band. Similarly, the primary structure to which the feed stock is aligned and if necessary attached, can be from wire, rod or band that is metal or bendable carbon fibre.

In an example, the manipulator comprises a roller 100 configured to engage with and roll along the feed.

In an example, the manipulator comprises a conduit section 110 through which the feed is configured to run.

In an example, the roller and conduit section are part of a head portion 32 of the manipulator.

In an example, the head portion of the manipulator is configured to rotate with respect to a body portion of the manipulator.

In an example, alignment of the feed to the primary structure comprises a translation of the manipulator with respect to the primary structure.

In an example, alignment of the feed to the primary structure comprises a rotation of the head portion of the manipulator with respect to the primary structure.

According to an example, the manipulator is configured to align the feed to the primary structure at a first intersection point of a pair of adj acent intersection points and then align the feed to the primary structure at a second intersection point of the pair of adjacent intersection points.

According to an example, the manipulator is configured to bend the feed. Alignment of the feed to the primary structure at the plurality of intersection points can then comprise a bending of the feed between at least one pair of adj acent intersection points.

In an example, bending of the feed comprises a translational movement of the manipulator.

In an example, bending of the feed comprises a rotation of the head portion of the manipulator with respect to the body portion of the manipulator.

The manipulator is configured to attach the feed to the primary structure at the plurality of intersection points.

In an example, attachment of the feed to the primary structure comprises a translation of the manipulator with respect to the primary structure.

In an example, attachment of the feed to the primary structure comprises a rotation of the head portion of the manipulator with respect to the primary structure.

According to an example, attachment of the feed to the primary structure at the plurality of intersection points comprises utilization of the assembly information.

The manipulator is configured to attach the feed to the primary structure at a first intersection point of a pair of adjacent intersection points and then attach the feed to the primary structure at a second intersection point of the pair of adjacent intersection points.

According to an example, attachment of the feed to the primary structure at the plurality of intersection points comprises a bending of the feed between at least one pair of adjacent intersection points.

According to an example, the manipulator is configured to attach the feed to the primary structure at a first intersection point of a pair of adjacent intersection points and then bend the feed between the pair of adjacent intersection points and then attach the feed to the primary structure at a second intersection point of the pair of adjacent intersection points.

According to an example, the manipulator is configured to move at least one wire or rod or band segment of the primary structure. Attachment of the feed to the primary structure at the plurality of intersection points can then comprise a movement of the at least one wire or rod or band segment of the primary structure.

According to an example, the manipulator is configured to move the at least one wire or rod or band segment of the primary structure such that a part of the at least one wire or rod or band segment is positioned at a corresponding at least one intersection point, such that the feed is attached to the at least one wire or rod or band segment at the at least one intersection point.

According to an example, attachment of the feed to the primary wire structure at the plurality of intersection points comprises: tying; MIG/MAG welding; or contact welding.

In an example, the manipulator comprises a transformer 120, and a cathode system 130 and an anode system 140.

In an example, the roller can form part of the anode system, and a cathode 150 can be situated adjacent to the roller, where the cathode forms part of the cathode system.

According to an example, the manipulator comprises a clamp 160 configured to clamp a wire segment 80 or rod segment 80 or band segment 80 of the primary structure to the feed at or in the vicinity of an associated intersection point.

According to an example, the clamp 160 forms part of the cathode system. Thus, the clamp can be situated adjacent to the roller, and now a separate cathode 150 is then not required.

Thus, the clamp 160 can be negatively charged and this respect can act as the cathode electrode 150 and be used along with the positively charged roller 100 to weld the feed wire, feed rod or feed band to wire, rod or band of the primary structure via contact welding.

According to an example, the system comprises at least one sensor device 90 configured to determine manipulator information, and the manipulator information comprises one or more of: a location of the manipulator relative to at least one intersection point; a distance between the manipulator and at least one part of the primary structure; a distance between the manipulator and at least one intersection point; a determined contact between the manipulator and at least one part of the primary structure; a contact force between the manipulator and at least one part of the primary structure; a torque being applied to the manipulator. Alignment of the feed to the primary structure at the plurality of intersection points can then comprise utilization of the manipulator information.

According to an example, the system comprises at least one sensor device 90 configured to determine manipulator information, and the manipulator information comprises one or more of: a location of the manipulator relative to at least one intersection point; a distance between the manipulator and at least one part of the primary structure; a distance between the manipulator and at least one intersection point; a determined contact between the manipulator and at least one part of the primary structure; a contact force between the manipulator and at least one part of the primary structure; a torque being applied to the manipulator. Attachment of the feed wire to the primary structure at the plurality of intersection points can then comprise utilization of the manipulator information.

Therefore, a manipulator forms an important and separate part of the system.

According to an example, a manipulator 30 for feed wire, feed rod or feed band is configured to be controlled to align a feed wire 40, feed rod 40 or feed band 40 to a primary structure 50 at a plurality of intersection points 60. The primary structure is a primary wire structure, primary rod structure, or primary band structure. The alignment of the feed wire, feed rod or feed wire to the primary structure at the plurality of intersection points comprises utilization of assembly information.

In an example, the manipulator comprises a roller 100 configured to engage with and roll along the feed wire or feed rod or feed band.

In an example, the manipulator comprises a conduit section 110 through which the feed wire or feed rod or feed band is configured to run.

In an example, the roller and conduit section are part of a head portion 32 of the feed manipulator.

In an example, the manipulator comprises a transformer 120.

In an example, the manipulator comprises a cathode system 130.

In an example, the manipulator comprises an anode system 140.

In an example, the roller is part of the part of the anode system.

In an example, the manipulator comprises a cathode copper plate 150 that is part of the cathode system and is arranged adjacent to the roller.

In an example, the manipulator comprises a clamp 160 configured to clamp a wire or rod or band segment of the primary building structure to the feed wire or feed rod or feed band at or in the vicinity of an associated intersection point.

In an example, the clamp is part of the cathode system and is arranged adjacent to the roller.

Thus, the clamp 160 can act as the cathode copper plate 150, and a separate plate cathode is not then required.

In an example, the manipulator is configured to align the feed wire, feed rod or feed band to the primary structure at a first intersection point of a pair of adjacent intersection points and then align the feed wire, feed rod or feed band to the primary structure at a second intersection point of the pair of adjacent intersection points.

In an example, the manipulator is configured to bend the feed wire, feed rod or feed band, and wherein alignment of the feed wire, feed rod or feed band to the primary structure at the plurality of intersection points comprises a bending of the feed wire, feed rod or feed band between at least one pair of adjacent intersection points.

In an example, the manipulator is configured to attach the feed wire, feed rod or feed band to the primary structure at the plurality of intersection points.

In an example, attachment of the feed wire, feed rod or feed band to the primary structure at the plurality of intersection points comprises utilization of the assembly information.

From the above, it is clear that a method of fabricating a building structure comprises:
receiving by a processing unit assembly information; and
aligning with a manipulator a feed to a primary structure at a plurality of intersection points, comprising utilizing the assembly information;
wherein, the feed is a feed wire, feed rod, or feed band; and
wherein, the primary structure is a primary wire structure, primary rod structure, or primary band structure.

In an example, the feed wire is metal. In an example, the feed rod is metal. In an example, the feed band is metal.

In an example, the feed wire is steel. In an example, the feed rod is steel. In an example, the feed band is steel.

In an example, the feed wire is carbon fibre. In an example, the feed rod is carbon fibre. In an example, the feed band is carbon fibre.

In an example, the feed wire has a circular cross-section. In an example, the feed rod has a circular cross-section.

In an example, the feed wire has a non-circular cross-section. In an example, the feed rod has a non-circular cross-section. In an example, the feed band has a non-circular cross-section.

In an example, wire of the primary wire structure is metal. In an example, rod of the primary rod structure is metal. In an example, band of the primary band structure is metal.

In an example, wire of the primary wire structure is steel. In an example, rod of the primary rod structure is steel. In an example, band of the primary band structure is steel.

In an example, wire of the primary wire structure is carbon fibre. In an example, rod of the primary rod structure is carbon fibre. In an example, band of the primary band structure is carbon.

In an example, wire of the primary wire structure has a circular cross-section. In an example, rod of the primary rod structure has a circular cross-section.

In an example, wire of the primary wire structure has a non-circular cross-section. In an example, rod of the primary rod structure has a non-circular cross-section. In an example, band of the primary band structure has a non-circular cross-section.

Thus, the method can operate with feed stock that is wire, rod or band that is metal or bendable carbon fibre for example, and where this stock can be round our other shapes, such as a band. Similarly, the primary structure to which the feed stock is aligned and if necessary attached, can be from wire, rod or band that is metal or bendable carbon fibre.

In an example, the method comprises aligning with the manipulator the feed to the primary structure at a first intersection point of a pair of adjacent intersection points and then aligning with the manipulator the feed to the primary structure at a second intersection point of the pair of adj acent intersection points.

In an example, the method comprises bending the feed with the manipulator between at least one pair of adjacent intersection points.

In an example, the method comprises attaching with the manipulator the feed to the primary structure at the plurality of intersection points.

In an example, the attaching of the feed wire to the primary structure at the plurality of intersection points comprises utilizing the assembly information.

In an example, the method comprises attaching with the manipulator the feed to the primary structure at a first intersection point of a pair of adjacent intersection points and then attaching with the manipulator the feed to the primary structure at a second intersection point of the pair of adj acent intersection points.

In an example, attaching the feed to the primary wire structure at the plurality of intersection points comprises bending with the manipulator the feed between at least one pair of adjacent intersection points.

In an example, the method comprises attaching with the manipulator the feed to the primary structure at a first intersection point of a pair of adjacent intersection points and then bending with the manipulator the feed between the pair of adjacent intersection points and then attaching with the manipulator the feed to the primary structure at a second intersection point of the pair of adjacent intersection points.

In an example, the method comprises moving with the manipulator individual wire or rod or band segments of the primary structure. The attaching of the feed to the primary structure at the plurality of intersection points can comprise a moving at least one wire or rod or band segment of the primary structure.

In an example, the method comprises moving with the manipulator the at least one wire or rod or band segment of the primary structure and positioning a part of the at least one wire or rod or band segment at a corresponding at least one intersection point, and attaching the feed to the at least one wire or rod or band segment at the at least one intersection point.

In an example, attaching the feed to the primary structure at the plurality of intersection points comprises: tying; MIG/MAG welding; or contact welding.

In an example, the method comprising clamping with a wire clamp of the manipulator comprises a wire or rod or band segment of the primary structure to the feed at or in the vicinity of an associated intersection point.

In an example, the method comprises determining manipulator information with at least one sensor device, wherein the manipulator information comprises one or more of: a location of the manipulator relative to at least one intersection point; a distance between the manipulator and at least one part of the primary structure; a distance between the manipulator and at least one intersection point; a determined contact between the manipulator and at least one part of the primary structure; a contact force between the manipulator and at least one part of the primary structure; a torque being applied to the manipulator. Aligning the feed to the primary structure at the plurality of intersection points can comprise utilizing the manipulator information.

In an example, the method comprises determining manipulator information with at least one sensor device, wherein the manipulator information comprises one or more of: a location of the manipulator relative to at least one intersection point; a distance between the manipulator and at least one part of the primary structure; a distance between the manipulator and at least one intersection point; a determined contact between the manipulator and at least one part of the primary structure; a contact force between the manipulator and at least one part of the primary structure; a torque being applied to the manipulator. Attaching the feed to the primary structure at the plurality of intersection points can comprise utilizing the manipulator information.

Specific detailed embodiments of the building structure fabrication system, and the method of fabricating a building structure are now described, where reference again is made to Figs. 1-21. In Figs. 1-21, the specific examples relate to a feed in the form of a feed wire, such as rebar from a feed stock, that is attached to a primary structure in the form of a series of sections of wire, such as rebar. However, as discussed above, wire is only one example of the feed and only one example of the material of the primary structure.

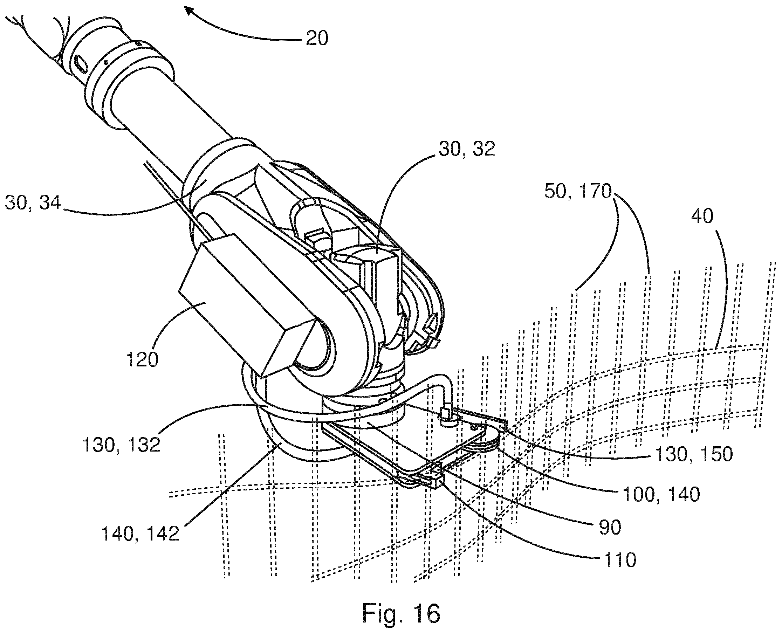

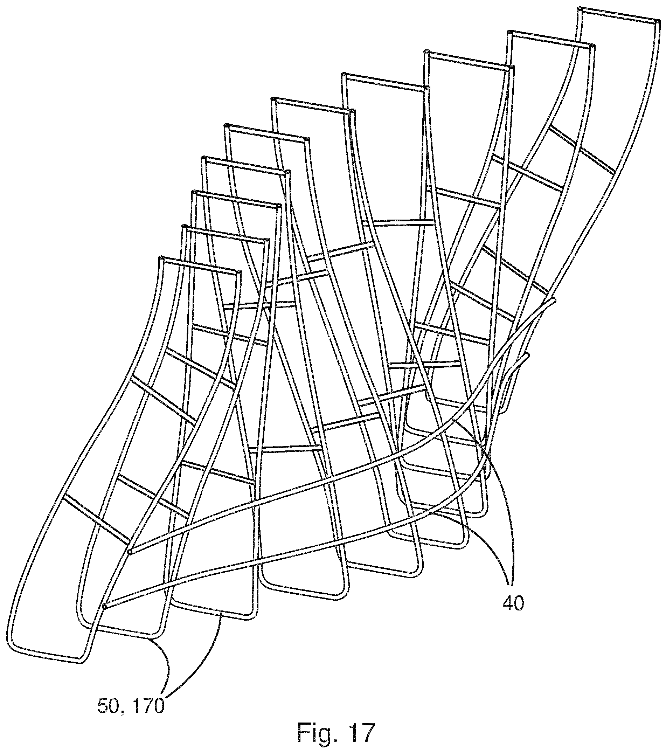

Figs. 1-6 show a representation from one figure to the next figure of a manipulator of a building structure fabrication system aligning and attaching a feed wire to a primary wire structure. Specifically, these figures show a contact welding wire application process with an adaptive, force-controlled manipulator. A robotic arm has such a manipulator, which can also be called an end-effector, which is used to align and attach the feed wire to the primary wire structure. The manipulator is described below in more detail with respect to Fig. 16. Continuing with Figs. 1-6 the primary wire structure shown is the structure of multiple section parts 170 shown extending in a wavy line from left to right. These are wire structures that are planar, and can have a vertical wire at the front and a vertical wire at the back, shown in the figures by the small circles at the end of each section. However, the sections need not be planar. Then, wires can extend between these vertical wires at the front and back, with these wires shown extending between the two circles. Thus in this example, the primary wire structure has a front and a back end, and the feed wire is then attached to the front and the back. However, this need not be the case and the primary wire structure could be formed by a single line of vertical or angled wires. It is also to be noted that the primary wire structure can be more complicated than having vertical wires at the front and back. For example, as shown in Figs. 17-18, the primary wire structure can have angled or bent wires at the front and/or back of such a structure, and the feed wire is aligned and attached using the building structure wire fixation system.

To explain further, a section 170 is part of a primary structure 50 fabricated from one or more strands in the form of wire, rod or band, such as rebar. A computational model of a final building structure, such as a wavy wall, can be generated by an architect or engineer. First slices through this model define complex shaped planes, and these are prefabricated as the sections 170. The sections are then positioned relative to one another to form an outline of the final structure. However, now using the system described herein, feed wire 40 or feed rod 40 or feed band 40 is aligned to the sections by a manipulator 30, through for example banding of the feed wire, rod or band by the manipulator and attached to the wires of the sections. The computational model can be used to generate assembly information that defines for example intersection points 60 where the feed wire is to be attached to the wires of the sections 170. The attachment can be carried out manually or by the manipulator itself. Then, a final structure matching in this example has been fabricated. This alignment and attachment of the feed wire, rod or band to the primary structure can be carried out in-situ or the final structure can be placed or erected on a construction site at the correct location. Then, for example, the final structure can be filled with concrete.

Continuing with Figs. 1-6 the manipulator 30 of the building structure fabrication system, has aligned and attached a number of feed wires 40 to the rear of the primary structure 50 that is itself made from wires, where these feed wires are arranged horizontally and each line of feed wire as it is different vertical position up the primary wire structure. The feed wires need not be aligned horizontally, and can be angled to the horizontal, and indeed can be wavy in terms of varying in angle, for example relative to the horizontal. The manipulator of the building fabrication system has aligned and attached at least one feed wire to the front of the primary wire structure, and is now in the process of aligning and attaching a further feed wire above the feed wires that have already been aligned and attached. The feed wire 40 is attached to wires of individual sections 170 of the primary structure 50 at a number of intersection points 60. The wire of the primary wire structure and of feed wire can be re-bar, which is steel wire commonly used in the building industry, and familiar to those who have seen buildings being made from reinforced concrete walls. Figs. 17-21 show examples of this wire. The manipulator, as described above, is at the end of a robotic arm, shown in more detail in Fig. 16. The manipulator has a body portion 34, and a head portion 32 rotationally attached to the body portion. The head portion can rotate vertically and horizontally independently with respect to the body portion. The whole robotic arm can move or translate forward and backwards and sideways, this can be via a telescopic movement or via a global movement of the whole robotic system. The feed wire (rebar) as shown in Figs. 1-6 can come from a roll or bar stock, that is off to the right hand side of the figures. The feed wire extends through a rebar threader 110 (also termed a conduit section 110) and goes round a roller 100. The manipulator and robotic arm move forward and backwards, with angling of the head portion of the manipulator to bend the feed wire that is then aligned to intersection points in space, which in this example are aligned with the primary structure. The intersection points 60 here are located along the vertical wires of the primary structure. When the aligned and bent wire has been correctly aligned with an intersection point (a vertical wire of the primary structure) the feed wire is attached to the wire of the primary structure. In this example, this is done through contact welding. However, other forms of attachment are possible. The manipulator has a transformer 120 and the roller is positively charged to form an anode of part of an anode system 140. A negative cathode copper plate 150 is located adjacent to the anode, and these are used to weld the feed wire to the primary wire structure. The robotic arm and manipulator then continues onwards aligning and bending the feed wire to the next intersection point, where again the feed wire is attached to the primary structure through contact welding. In a different example of the manipulator, rather than using contact welding, an oxyacetylene torch is provided at the end, to apply what could be considered normal welding, and in a different example the manipulator has wire dispensing and tying system, to tie the feed wire to the primary structure using thinner wire than the feed wire itself. As discussed below, rather than use a negative cathode copper plate 150, a clamp 160 can be used to help move a wire of a section 170 in order that the feed wire can be attached to the wire of the section at the required intersection point 60, and then the clamp can be negatively charged whilst the roller 100 is positively charged relative to the clamp in order to weld the wires together.

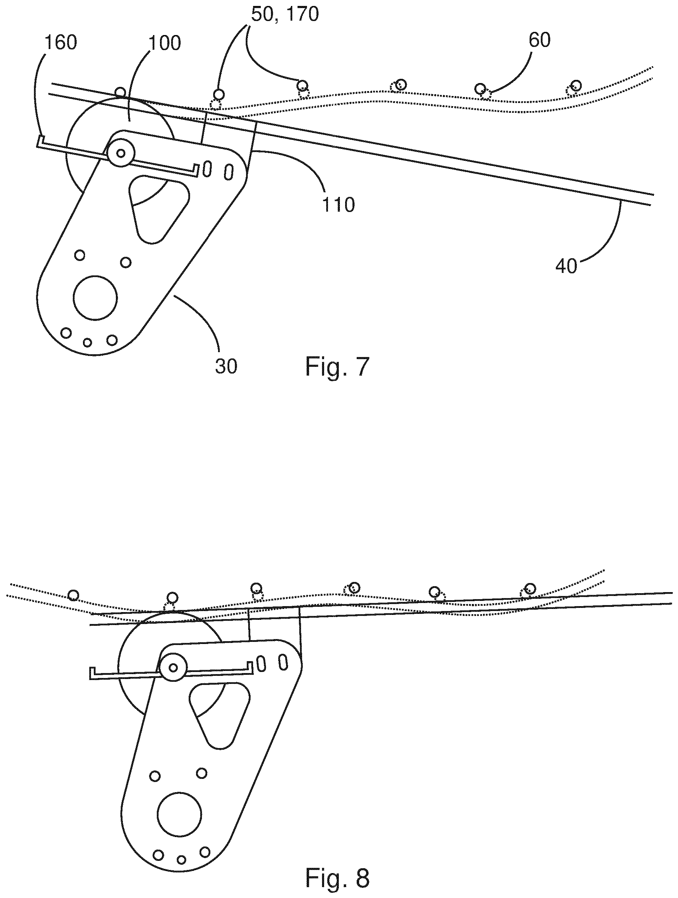

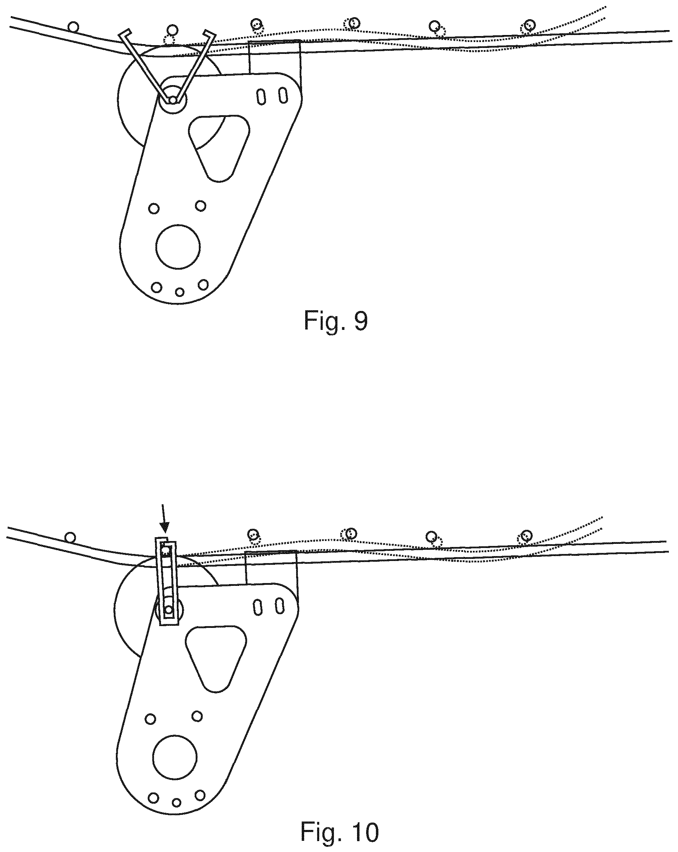

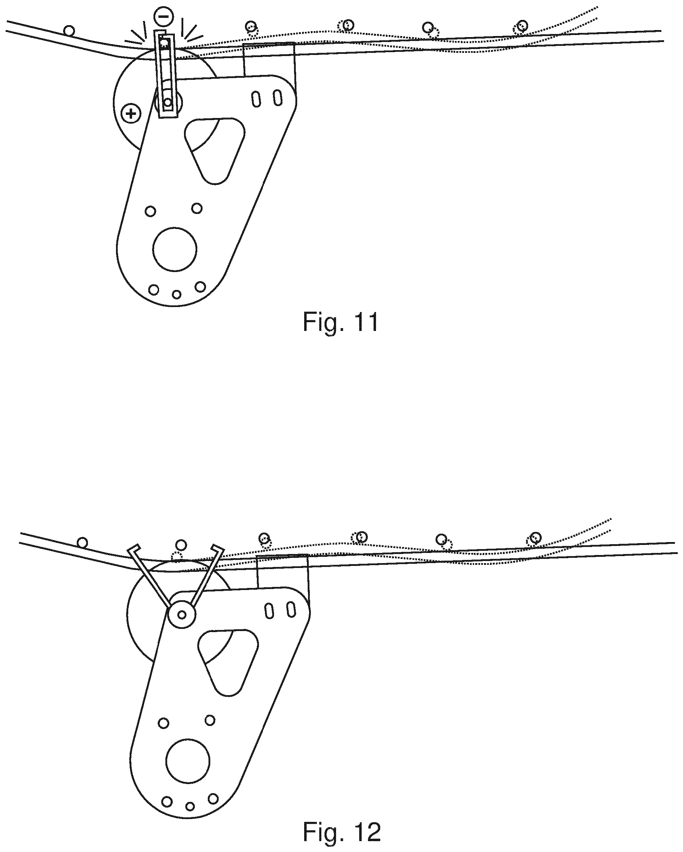

Figs. 7-15 show a representation from one figure to the next of a manipulator 30 of a building structure fabrication system aligning and attaching a feed wire 40 to a primary structure 50 that is made from wire. Specifically, these figures show a contact welding wire application process with a position-controlled clamping mechanism. In this example, the primary structure is formed from a series of vertical wires positioned in space, forming just one line. The wires of the primary wire structure have been positioned close to the required position, but for expediency have not been positioned at exactly the correct positions. The primary wire structure does however have some flexibility with respect to movement of the wires of the primary wire structure. This is represented in Figs. 7-15 by the light circles showing the correct positions of the wires of the primary wire structure, with the dark circles showing the present positions of the wires of the primary wire structure. The light circles are the intersection points 60 that form part of assembly information, where the manipulator will fabricate the building structure such that the feed is aligned and attached to the wires of primary structure at the correct intersection point locations. However, a processing unit 20 of the robotic system has assembly information relating to 3-D data of the exact positions of the intersection points that are required. The processing unit is not shown in Figs. 7-15. As shown in Figs. 7-15, the manipulator has a head portion 32 that can rotate vertically and horizontally respect to a body portion 34 of the manipulator, and the whole robotic system can translate forward backwards and sideways. In this manner, the building structure fabrication system is very similar to that described with respect to Figs. 1-6. Thus, the manipulator aligns and bends the feed wire, which can then be somewhat distant from the adjacent vertical wire of the primary wire structure. Then, the manipulator head has a grasping mechanism (also called a clamp 160) that goes around a wire of the primary wire structure and pulls it towards the manipulator head, such that it becomes located at the correct intersection point, this is shown in Figs. 9-10. The clamp 160 can be negatively charged and therefore in addition to being a clamp can also act as a negative electrode similar to electrode 150. Then, in the same way as described with respect to Figs. 1-6 contact welding is used to attach the feed wire to the wire of the primary structure that has been moved to the correct position, as shown in Fig. 11. Rather than the manipulator contact welding, the manipulator can utilize an oxyacetylene torch to weld the feed wire and wire of the primary structure together, or a human operative can weld the wires together than are clamped together at the correct position. The robotic arm manipulator then continues onwards bending and aligning the feed wire to the correct intersection points, and where necessary aligning by grabbing and pulling wires of the primary wire structure to the correct intersection point and attaching the feed wire to the wire structure in order that the wire structure with the feed wire attached correctly represents the required three-dimensional structure. The above figures relate to a contact welding application process with a position-controlled clamping mechanism, where contact welding is used to attach feed wire to the wire of the primary structure. However, the feed wire and wire of the primary structure can be tied together with wire, once the feed wire and wire of the primary structure are clamped together at the correct position. The tying can be carried out by a specific manipulator with wire tying capabilities or carried out by a human operative.

Fig. 16 shows a detailed example of a manipulator at the end of a robotic arm, where the manipulator is that as shown in Figs. 1-6. The manipulator has a body portion 34 with a transformer. A head portion 32 of the manipulator is rotationally attached to the body portion. A processing unit 20 (not shown) communicates with the manipulator head 32 at the end of the robotic arm. The manipulator has a transformer 120, and a rolling bending positive copper anode 100 connected to the transformer by a positive anode cable 142 with this forming an anode system 140, the manipulator has a negative copperplate 150 connected to the transformer by a negative cathode cable 132 with this forming a cathode system 130. The manipulator also has a conduit section or Rebar threader 110, which is a conduit section through which Rebar is threaded. Movement of the head of the manipulator leads to alignment and bending of feed wire, or indeed of the wire of a section as required, and the cathode system and anode system operate together in order to weld the feed wire 40 to sections 170 of the primary structure 50.

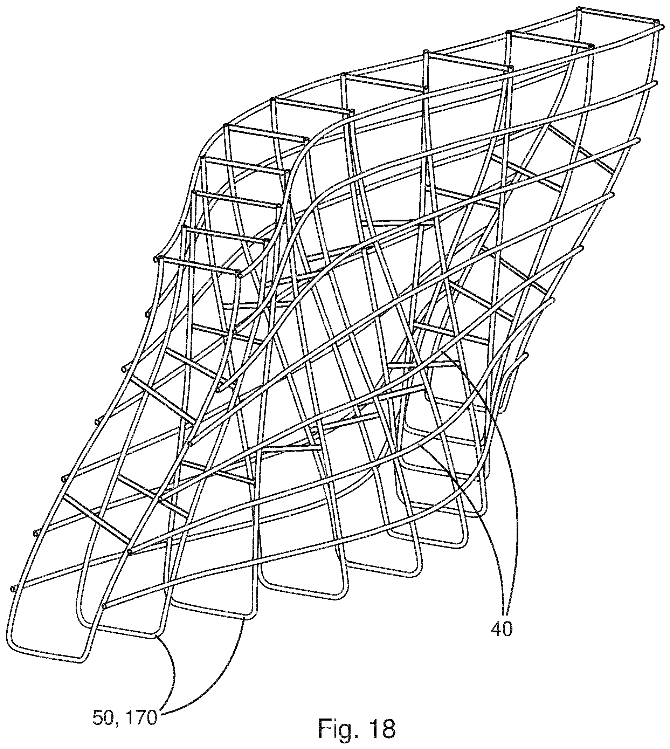

Fig. 17 shows an example of a primary structure 50 made from wire sections 170, with two lines of feed wire 40 at the bottom that have been aligned and attached to the primary wire structure in a manner as described above. Fig. 18 shows an example of a primary structure 50 made from wire, with lines of feed wire 40 that have been aligned and attached to the primary wire structure.

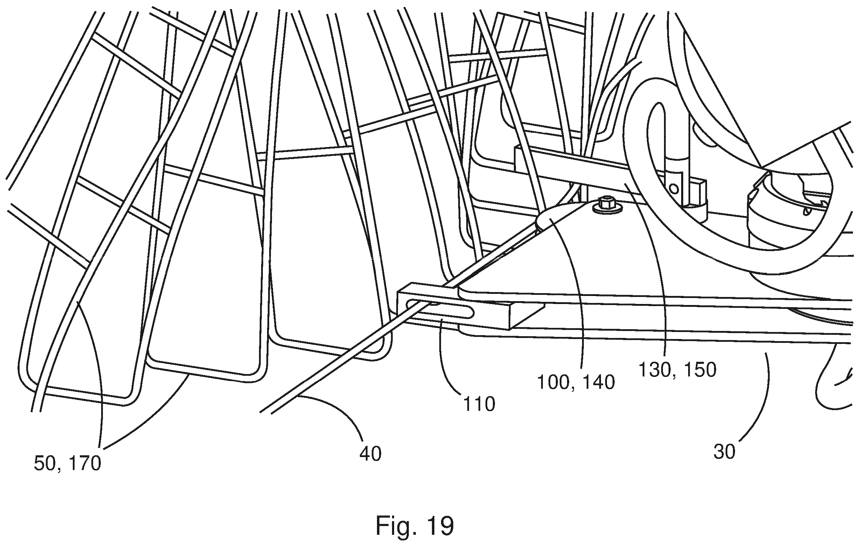

Fig. 19 shows an example of a manipulator 30 of a building structure fabrication system that is aligning and attaching a feed wire 40 to a primary wire structure 50. In this specific example, a feed wire has been bent and aligned to several wires of a complex shaped primary wire structure, and the feed wire has been bent and aligned to another wire of the primary wire structure. A roller 100 of the manipulator is about to be positively charged and a copper electrode 150 negatively charged in order to contact weld the feed wire to a wire of the primary wire structure adjacent to the roller as shown in Fig. 19.

Fig, 20 shows an example of two lines of feed wire 40 that have been aligned and attached to a number of bars of the primary wire structure 50, in a manner as described above.

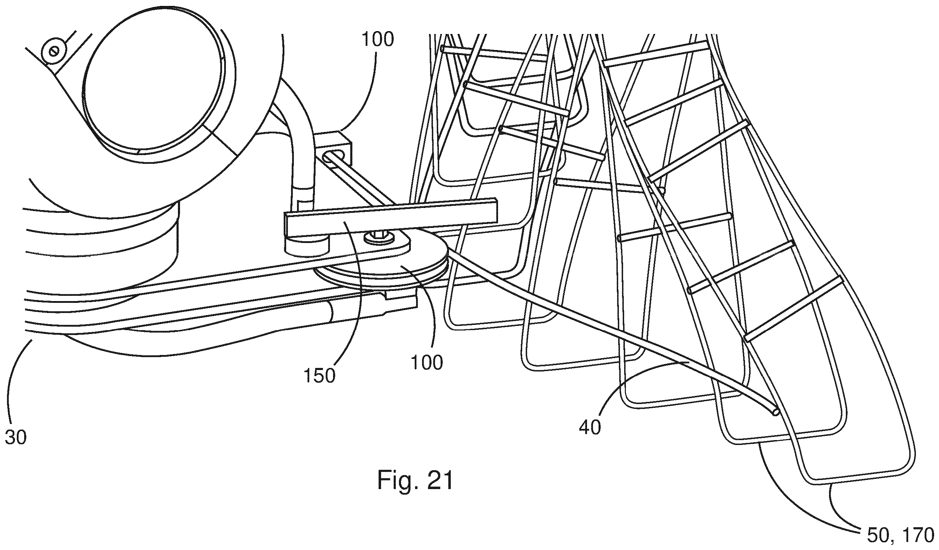

Fig. 21 shows an example of a manipulator of a building structure fabrication system that is in the process of aligning and attaching a feed wire 40 to a number of bars of the primary wire structure 50.

The robotic arm system, with a manipulator body portion or manipulator head portion can have a number of different sensor systems, to aid in positioning of the manipulator head with respect to the primary wire structure in order that part of a wire structure that is in an incorrect position does not lead to damage of the robotic system. Also, the sensor devices can be used to refine and aid in positioning of the feed wire and/or wires of the primary wire structure with respect to the correct intersection points.

In this manner, a Robotic end-effector for 3D wire application on an arbitrary primary structure is provided. The Tool Center Point (TCP) of the robot follows the 3D shape of the primary structure to apply the wire. The end-effector feeds wire along the path and fastens it to the primary structure at intersection points. This results in 3D bending of the wire by interpolating between support points and interlinking of the primary structure to a 3D mesh.

The workflow of a detailed example of the robotic end-effector and the wire application process is as follows:
1. Generation of robotic procedures and motions based on 3D mesh data (e.g. location of slices, layer height, wire diameter, curvatures, etc.)
2. Feeding wire from feedstock (e.g. from a roll, bar stock, etc.) to the robotic end-effector.
3. Robotic motion to first intersection point with primary structure. The intersection point can be localized through 3D data from the computational model and refined by additional sensor data if high accuracy and precision is required (e.g. laser sensor, force sensor, optic measurement, contact sensor, etc.).
4. Fastening of the wire with the primary structure. Different methods and techniques can be applied to achieve this:
   a. Wire tying: equipping the end-effector with a rebar-tying gun, enables the automatic tying of the wire to the primary structure.
   b. MIG/MAG welding: equipping the end-effector with a welding torch, the wire can be attached to the primary structure by build-up welding.
   c. Contact welding: Pushing the wire with an anode attached to the end-effector and placing the electrode on the primary structure, the wire can be fastened by contact welding. The necessary contact force can be achieved by:
      i. A clamping mechanism that pulls the primary structure to the wire
      ii. Force-controlled positioning of the wire on the primary structure with a force sensor integrated in the end-effector. This method enables to apply the wire to the primary structure without mechanically penetrating the mesh at the intersection point.
5. Guiding wire to the next intersection point. This bends the wire along the predefined geometry of the primary structure.
6. Repeat step 4 and 5 at next intersection point. After the last intersection point, the wire is cut and the end-effector releases from the mesh structure to start building the next layer (back to step 3).

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A building structure fabrication system for feed wire, feed rod or feed band, the system comprising:
- a processing unit (20); and
- a manipulator (30);
wherein, the processing unit is configured to receive assembly information;
wherein, the manipulator is configured to align a feed (40) to a primary structure (50) at a plurality of intersection points (60);
wherein, the feed is a feed wire, feed rod, or feed band;
wherein, the primary structure is a primary wire structure, primary rod structure, or primary band structure; and
wherein, the alignment of the feed to the primary structure at the plurality of intersection points comprises utilization of the assembly information; and
wherein the manipulator is configured to attach the feed to the primary structure at the plurality of intersection points; and
wherein the manipulator is configured to attach the feed to the primary structure at a first intersection point of a pair of adjacent intersection points and then attach the feed to the primary structure at a second intersection point of the pair of adjacent intersection points; and
wherein the manipulator comprises a clamp (160) configured to clamp a wire or rod or band segment of the primary building structure to the feed wire or feed rod or feed band at or in the vicinity of an associated intersection point.

2. System according to claim 1, wherein the manipulator is configured to align the feed to the primary structure at a first intersection point of a pair of adjacent intersection points and then align the feed to the primary structure at a second intersection point of the pair of adjacent intersection points.

3. System according to any of claims 1-2, wherein the manipulator is configured to bend the feed, and wherein alignment of the feed to the primary structure at the plurality of intersection points comprises a bending of the feed between at least one pair of adjacent intersection points.

4. System according to claim 1-3, wherein attachment of the feed to the primary structure at the plurality of intersection points comprises utilization of the assembly information.

5. System according to any of claims 1-4, wherein attachment of the feed to the primary structure at the plurality of intersection points comprises a bending of the feed between at least one pair of adjacent intersection points.

6. System according to claim 4, wherein the manipulator is configured to attach the feed to the primary structure at a first intersection point of a pair of adjacent intersection points and then bend the feed between the pair of adjacent intersection points and then attach the feed to the primary structure at a second intersection point of the pair of adjacent intersection points.

7. System according to any of claims 1-6, wherein the manipulator is configured to move at least one wire or rod or band segment of the primary structure, and wherein attachment of the feed to the primary structure at the plurality of intersection points comprises a movement of the at least one wire or rod or band segment of the primary structure.

8. System according to claim 7. wherein the manipulator is configured to move the at least one wire or rod or band segment of the primary structure such that a part of the at least one wire or rod or band segment is positioned at a corresponding at least one intersection point, such that the feed is attached to the at least one wire or rod or band segment at the at least one intersection point.

9. System according to any of claims 1-8, wherein attachment of the feed to the primary wire structure at the plurality of intersection points comprises: tying; MIG/MAG welding; or contact welding.

10. System according to any of claims 1-9, wherein the system comprises at least one sensor device (90) configured to determine manipulator information, wherein the manipulator information comprises one or more of: a location of the manipulator relative to at least one intersection point; a distance between the manipulator and at least one part of the primary structure; a distance between the manipulator and at least one intersection point; a determined contact between the manipulator and at least one part of the primary structure; a contact force between the manipulator and at least one part of the primary structure; a torque being applied to the manipulator, and wherein the alignment of the feed to the primary structure at the plurality of intersection points comprises utilization of the manipulator information.

11. System according to any of claims 1-10, wherein the system comprises at least one sensor device (90) configured to determine manipulator information, wherein the manipulator information comprises one or more of: a location of the manipulator relative to at least one intersection point; a distance between the manipulator and at least one part of the primary structure; a distance between the manipulator and at least one intersection point; a determined contact between the manipulator and at least one part of the primary structure; a contact force between the manipulator and at least one part of the primary structure; a torque being applied to the manipulator; and wherein the attachment of the feed wire to the primary structure at the plurality of intersection points comprises utilization of the manipulator information.

12. A method of fabricating a building structure with a building structure fabrication system according to any of claims 1 - 11, the method comprising:
- receiving by a processing unit assembly information; and
- aligning with a manipulator a feed to a primary structure at a plurality of intersection points, comprising utilizing the assembly information;
wherein, the feed is a feed wire, feed rod, or feed band; and
wherein, the primary structure is a primary wire structure, primary rod structure, or primary band structure.

## Patentansprüche

1. Herstellungssystem für eine Gebäudestruktur für einen Zuführdraht, eine Zuführstange oder ein Zuführband, wobei das System umfasst:
- eine Verarbeitungseinheit (20); und
- einen Manipulator (30);
wobei die Verarbeitungseinheit konfiguriert ist, um Montageinformationen zu empfangen; wobei der Manipulator konfiguriert ist, um eine Zuführung (40) an einer Vielzahl von Kreuzungspunkten (60) auf eine primäre Struktur (12) auszurichten,
wobei die Zuführung ein Zuführdraht, eine Zuführstange oder ein Zuführband ist;
wobei die primäre Struktur eine primäre Drahtstruktur, eine primäre Stangenstruktur oder eine primäre Bandstruktur ist; und
wobei die Ausrichtung der Zuführung auf die primäre Struktur an der Vielzahl von Kreuzungspunkten die Nutzung der Montageinformationen umfasst; und
wobei der Manipulator konfiguriert ist, um die Zuführung an der primären Struktur an der Vielzahl von Kreuzungspunkten anzubringen; und
wobei der Manipulator konfiguriert ist, um die Zuführung an der primären Struktur an einem ersten Kreuzungspunkt eines Paares von benachbarten Kreuzungspunkten anzubringen und dann die Zuführung an der primären Struktur an einem zweiten Kreuzungspunkt des Paares von benachbarten Kreuzungspunkten anzubringen; und
wobei der Manipulator eine Klemme (160) umfasst, die konfiguriert ist, um ein Draht- oder Stangen- oder Bandsegment der primären Baustruktur an den Zuführdraht oder die Zuführstange oder das Zuführband an oder in der Nähe eines zugehörigen Kreuzungspunkts zu klemmen.

2. System nach Anspruch 1, wobei der Manipulator konfiguriert ist, um die Zuführung an der primären Struktur an einem ersten Kreuzungspunkt eines Paares von benachbarten Kreuzungspunkten auszurichten und dann die Zuführung an der primären Struktur an einem zweiten Kreuzungspunkt des Paares von benachbarten Kreuzungspunkten auszurichten.

3. System nach einem der Ansprüche 1-2, wobei der Manipulator konfiguriert ist, um die Zuführung zu biegen, und wobei die Ausrichtung der Zuführung an der primären Struktur an der Vielzahl von Kreuzungspunkten ein Biegen der Zuführung zwischen mindestens einem Paar von benachbarten Kreuzungspunkten umfasst.

4. System nach Anspruch 1-3, wobei die Befestigung der Zuführung an der primären Struktur
an der Vielzahl von Kreuzungspunkten die Nutzung der Montageinformationen umfasst.

5. System nach einem der Ansprüche 1-4, wobei die Befestigung der Zuführung an der primären Struktur an der Vielzahl von Kreuzungspunkten ein Biegen der Zuführung zwischen mindestens einem Paar von benachbarten Kreuzungspunkten umfasst.

6. System nach Anspruch 4, wobei der Manipulator konfiguriert ist, um die Zuführung an der primären Struktur an einem ersten Kreuzungspunkt eines Paares von benachbarten Kreuzungspunkten anzubringen und dann die Zuführung zwischen dem Paar von benachbarten Kreuzungspunkten zu biegen und dann die Zuführung an der primären Struktur an einem zweiten Kreuzungspunkt des Paares von benachbarten Kreuzungspunkten anzubringen.

7. System nach einem der Ansprüche 1-6, wobei der Manipulator konfiguriert ist, um mindestens ein Draht- oder Stab- oder Bandsegment der primären Struktur zu bewegen, und wobei die Befestigung der Zuführung an der primären Struktur an der Vielzahl von Kreuzungspunkten eine Bewegung des mindestens einen Draht- oder Stab- oder Bandsegments der primären Struktur umfasst.

8. System nach Anspruch 7, wobei der Manipulator konfiguriert ist, um das mindestens eine Draht- oder Stab- oder Bandsegment der primären Struktur so zu bewegen, dass ein Teil des mindestens einen Draht- oder Stab- oder Bandsegments an einem entsprechenden mindestens einen Kreuzungspunkt positioniert ist, so dass die Zuführung an dem mindestens einen Draht- oder Stab- oder Bandsegment an dem mindestens einen Kreuzungspunkt angebracht ist.

9. System nach einem der Ansprüche 1-8, wobei die Befestigung der Zuführung an der primären Drahtstruktur an der Vielzahl von Kreuzungspunkten Folgendes umfasst: Binden; MIG/MAG-Schweißen; oder Kontaktschweißen.

10. System nach einem der Ansprüche 1-9, wobei das System mindestens eine Sensorvorrichtung (90) umfasst, die konfiguriert ist, um Manipulatorinformationen zu bestimmen, wobei die Manipulatorinformationen eines oder mehrere der Folgenden umfassen: eine Position des Manipulators in Bezug auf mindestens einen Kreuzungspunkt; einen Abstand zwischen dem Manipulator und mindestens einem Teil der primären Struktur; einen Abstand zwischen dem Manipulator und mindestens einem Kreuzungspunkt; einen bestimmten Kontakt zwischen dem Manipulator und mindestens einem Teil der primären Struktur; eine Kontaktkraft zwischen dem Manipulator und mindestens einem Teil der primären Struktur; ein Drehmoment, das auf den Manipulator ausgeübt wird, und wobei die Ausrichtung der Zuführung auf die primäre Struktur an der Vielzahl von Kreuzungspunkten die Nutzung der Montageinformationen umfasst.

11. System nach einem der Ansprüche 1-10, wobei das System mindestens eine Sensorvorrichtung (90) umfasst, die konfiguriert ist, um Manipulatorinformationen zu bestimmen, wobei die Manipulatorinformationen eines oder mehrere der Folgenden umfassen: eine Position des Manipulators in Bezug auf mindestens einen Kreuzungspunkt; einen Abstand zwischen dem Manipulator und mindestens einem Teil der primären Struktur; einen Abstand zwischen dem Manipulator und mindestens einem Kreuzungspunkt; einen bestimmten Kontakt zwischen dem Manipulator und mindestens einem Teil der primären Struktur; eine Kontaktkraft zwischen dem Manipulator und mindestens einem Teil der primären Struktur; ein Drehmoment, das auf den Manipulator ausgeübt wird, und wobei die Befestigung des Zuführungsdrahts an der primären Struktur an der Vielzahl von Kreuzungspunkten die Nutzung der Manipulatorinformationen umfasst.

12. Verfahren zur Herstellung einer Gebäudestruktur mit einem Baustrukturherstellungssystem nach einem der Ansprüche 1-11, wobei das Verfahren Folgendes umfasst:
- Empfangen von Montageinformationen durch eine Verarbeitungseinheit; und
- Ausrichten einer Zuführung auf eine primäre Struktur an einer Vielzahl von Kreuzungspunkten mit einem Manipulator, umfassend die Nutzung der Montageinformationen;
wobei die Zuführung ein Zuführdraht, eine Zuführstange oder ein Zuführband ist; und
wobei die primäre Struktur eine primäre Drahtstruktur, eine primäre Stangenstruktur oder eine primäre Bandstruktur ist.

## Revendications

1. Système de fabrication de structure de bâtiment pour fil d'alimentation, tige d'alimentation ou bande d'alimentation, le système comprenant :
- une unité de traitement (20) et
- un manipulateur (30) ;
dans lequel, l'unité de traitement est configurée de manière à recevoir des informations d'assemblage ; dans lequel, le manipulateur est configuré de manière à aligner une alimentation (40) sur une structure primaire (50) au niveau d'une pluralité de points d'intersection (60) ;
dans lequel, l'alimentation est un fil d'alimentation, une tige d'alimentation ou une bande d'alimentation ;
dans lequel, la structure primaire est une structure de fil primaire, une structure de tige primaire ou une structure de bande primaire ; et
dans lequel, l'alignement de l'alimentation sur la structure primaire au niveau de la pluralité de points d'intersection comprend l'utilisation des informations d'assemblage ; et dans lequel le manipulateur est configuré de manière à fixer l'alimentation sur la structure primaire au niveau de la pluralité de points d'intersection ; et
dans lequel le manipulateur est configuré de manière à fixer l'alimentation sur la structure primaire au niveau d'un premier point d'intersection d'une paire de points d'intersection adjacents, puis à fixer l'alimentation sur la structure primaire au niveau d'un second point d'intersection de la paire de points d'intersection adjacents ; et
dans lequel le manipulateur comprend un dispositif de serrage (160) configuré de manière à serrer un segment de fil, de tige ou de bande de la structure de bâtiment primaire sur le fil d'alimentation, sur la tige d'alimentation ou sur la bande d'alimentation au niveau ou à proximité d'un point d'intersection associé.

2. Système selon la revendication 1, dans lequel le manipulateur est configuré de manière à aligner l'alimentation sur la structure primaire au niveau d'un premier point d'intersection d'une paire de points d'intersection adjacents ;
et à aligner ensuite l'alimentation sur la structure primaire au niveau d'un second point d'intersection de la paire de points d'intersection adjacents.

3. Système selon l'une des revendications 1 et 2, dans lequel le manipulateur est configuré de manière à plier l'alimentation, et dans lequel l'alignement de l'alimentation sur la structure primaire au niveau de la pluralité de points d'intersection comprend une courbure de l'alimentation entre au moins une paire de points d'intersection adjacents.

4. Système selon les revendications 1 à 3, dans lequel la fixation de l'alimentation sur la structure primaire au niveau de la pluralité de points d'intersection comprend l'utilisation des informations d'assemblage.

5. Système selon l'une des revendications 1 à 4, dans lequel la fixation de l'alimentation sur la structure primaire au niveau de la pluralité de points d'intersection comprend une courbure de l'alimentation entre au moins une paire de points d'intersection adjacents.

6. Système selon la revendication 4, dans lequel le manipulateur est configuré de manière à fixer l'alimentation sur la structure primaire au niveau d'un premier point d'intersection d'une paire de points d'intersection adjacents, puis à plier l'alimentation entre la paire de points d'intersection adjacents, puis à fixer l'alimentation sur la structure primaire au niveau d'un second point d'intersection de la paire de points d'intersection adjacents.

7. Système selon l'une des revendications 1 à 6, dans lequel le manipulateur est configuré de manière à déplacer au moins un segment de fil ou de tige ou de bande de la structure primaire, et dans lequel la fixation de l'alimentation sur la structure primaire au niveau de la pluralité de points d'intersection comprend un mouvement dudit au moins un segment de fil ou de tige ou de bande de la structure primaire.

8. Système selon la revendication 7, dans lequel le manipulateur est configuré de manière à déplacer ledit au moins un segment de fil ou de tige ou de bande de la structure primaire de sorte qu'une partie dudit au moins un segment de fil ou de tige ou de bande est positionné au niveau d'au moins un point d'intersection correspondant, de sorte que l'alimentation est fixée sur ledit au moins un segment de fil ou de tige ou de bande au niveau dudit au moins un point d'intersection.

9. Système selon l'une des revendications 1 à 8, dans lequel la fixation de l'alimentation sur la structure de fil primaire au niveau de la pluralité de points d'intersection comprend : un liage ; un soudage MIG/MAG ; ou un soudage par contact.

10. Système selon l'une des revendications 1 à 9, dans lequel le système comprend au moins un dispositif de capteur (90) configuré de manière à déterminer des informations du manipulateur, dans lequel les informations du manipulateur comprennent un ou plusieurs éléments parmi : un emplacement du manipulateur par rapport à au moins un point d'intersection ; une distance entre le manipulateur et au moins une partie de la structure primaire ; une distance entre le manipulateur et au moins un point d'intersection ; un contact déterminé entre le manipulateur et au moins une partie de la structure primaire ; une force de contact entre le manipulateur et au moins une partie de la structure primaire ; un couple appliqué au manipulateur, et dans lequel l'alignement de l'alimentation sur la structure primaire au niveau de la pluralité de points d'intersection comprend l'utilisation des informations de manipulateur.

11. Système selon l'une des revendications 1 à 10, dans lequel le système comprend au moins un dispositif de capteur (90) configuré de manière à déterminer des informations du manipulateur, dans lequel les informations du manipulateur comprennent un ou plusieurs éléments parmi : un emplacement du manipulateur par rapport à au moins un point d'intersection ; une distance entre le manipulateur et au moins une partie de la structure primaire ; une distance entre le manipulateur et au moins un point d'intersection ; un contact déterminé entre le manipulateur et au moins une partie de la structure primaire ; une force de contact entre le manipulateur et au moins une partie de la structure primaire ; un couple appliqué au manipulateur ; et dans lequel la fixation du fil d'alimentation sur la structure primaire au niveau de la pluralité de points d'intersection comprend l'utilisation des informations du manipulateur.

12. Procédé de fabrication d'une structure de bâtiment avec un système de fabrication de structure de bâtiment selon l'une des revendications 1 à 11, le procédé comprenant les étapes consistant à :
- recevoir, par une unité de traitement, des informations d'assemblage ; et
- aligner, avec un manipulateur, une alimentation sur une structure primaire au niveau d'une pluralité de points d'intersection, comprenant l'utilisation des informations d'assemblage ;
dans lequel, l'alimentation est un fil d'alimentation, une tige d'alimentation ou une bande d'alimentation ; et
dans lequel, la structure primaire est une structure de fil primaire, une structure de tige primaire ou une structure de bande primaire.
